# EUROPEAN PATENT SPECIFICATION

(11) **EP 2 672 656 B1**
(45) Date of publication and mention of the grant of the patent: **17.01.2018**
(21) Application number: 12772042.3
(22) Date of filing: 11.04.2012
(51) Int. Cl.: H04M 3/18, H04L 12/10, H02H 9/04, H04L 25/02

(54) **POWER OVER ETHERNET PORT PROTECTION CIRCUIT AND ETHERNET POWER SUPPLY EQUIPMENT**
SCHUTZSCHALTUNG FÜR EINEN PORT ZUR STROMVERSORGUNG ÜBER ETHERNET UND ETHERNET-STROMVERSORGUNGSEINRICHTUNG
CIRCUIT DE PROTECTION DE PORT D'ALIMENTATION ÉLECTRIQUE PAR ETHERNET ET ÉQUIPEMENT D'ALIMENTATION ÉLECTRIQUE PAR ETHERNET

(30) Priority: 11.04.2011 CN 201110089626
(43) Date of publication of application: 11.12.2013
(73) Proprietor: Huawei Technologies Co., Ltd., Longgang District Shenzhen, Guangdong 518129 (CN)
(72) Inventor: ZHOU, Ming, Chengdu Sichuan 611731 (CN); LI, Jing, Chengdu Sichuan 611731 (CN); XU, Shuai, Chengdu Sichuan 611731 (CN)
(74) Representative: Pfenning, Meinig & Partner mbB
(86) International application number: PCT/CN2012/073789
(87) International publication number: WO 2012/139493

(56) References cited:
- EP-A1- 2 239 925
- EP-A2- 0 886 361
- CN-A- 101 227 087
- CN-A- 101 232 384
- CN-A- 102 185 698
- CN-C- 100 470 992
- CN-Y- 200 950 537
- US-A1- 2004 246 644
- US-A1- 2007 041 387

## Description

### FIELD OF THE INVENTION

The present invention relates to the field of electronic technologies, and in particular, to a protection circuit of Power Over Ethernet port and an Ethernet power-sourcing equipment.

### BACKGROUND OF THE INVENTION

Power over Ethernet (Power over Ethernet, PoE) refers to a technology that an Ethernet power-sourcing equipment (Power-Sourcing Equipment, PSE) supplies power for a powered device (Powered Device, PD) through an Ethernet cable, and a longest distance of reliable power supply thereof is 100 meters. When the PSE and the PD are far away from each other and wiring thereof is placed outdoors, the PSE and the PD are very vulnerable to lightening strikes. Therefore, it is very necessary to provide corresponding protective measures.

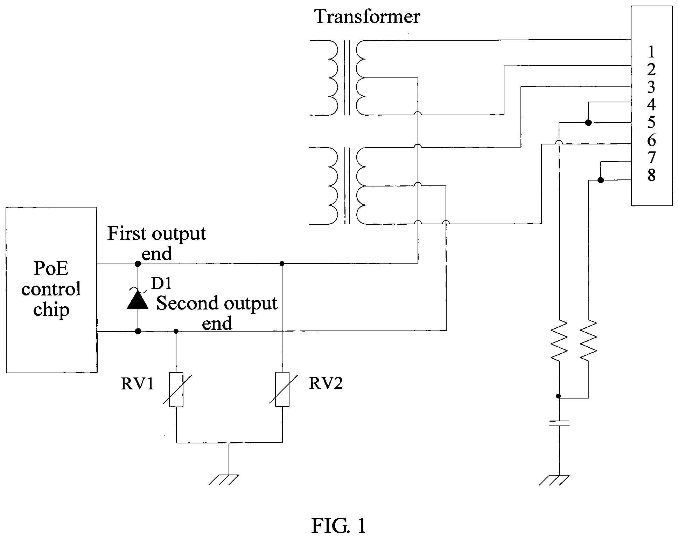

The PSE includes a PoE control chip, which outputs a 48 V direct current voltage through a set of direct current output ends. The set of direct current output ends includes a first direct current output end and a second direct current output end, and a voltage between the first direct current output end and the second direct current output end is 48 V. In the prior art, a port protection circuit is generally added to the PSE. As shown in FIG 1, a schematic diagram of a port protection circuit in the prior art is shown.

An existing port protection circuit mainly includes a differential mode suppression component D1 and a common mode suppression component. An end of the differential mode suppression componentD1 is connected to the first direct current output end of the PoE control chip, and another end thereof is connected to the second direct current output end of the PoE control chip. The common mode suppression component includes a first voltage dependent resistor RV1 and a second voltage dependent resistor RV2. A first end of the first voltage dependent resistor RV1 is connected to the first direct current output end of the PoE control chip, and another end thereof is grounded. A first end of the second voltage dependent resistor RV2 is connected to the second direct current output end of the PoE control chip, and another end thereof is grounded.

In a process of studying the prior art, it is found that the existing port protection circuit uses two voltage dependent resistors to protect against a common mode surge. When a common mode surge occurs, it is impossible for the two voltage dependent resistors to act absolutely consistently, so that a differential mode residual voltage is caused. When the differential mode residual voltage is large, the PoE control chip is damaged.

CN 101227087 A provides lightning strike protection equipment based on scenario B indicated in IEEE 802.3af. In the lightning strike protection equipment, a first direct current output of PoE control chip grounded through a voltage dependent resistor RV2 and current-limiting inductance L1 in series, a second direct current output of PoE control chip grounded through a voltage dependent resistor RV3 and current-limiting inductance L2 in series.

US 2004/24664 A1 discloses surge protection devices for protecting telephone/data communications related equipment from power and transient surges occurring on the tip and/or ring on conductors of transmission lines connected thereto, and the surges is caused by lightning strike and other voltage/current surges on the transmission lines.

CN 100470992C discloses a lightning strike protection equipment for Ethernet port. At every ports of an input side, a first grade protection circuit consists of a gas-discharge tube is set. At port of an equipment side, a second grade protection circuit consists of a silicon protected diode and a fast recovery diode. Action voltage of the first grade protection circuit is higher than the second grade protection circuit. A current-limiting component connects in a series mode between a port of an input side and a port of an equipment side.

EP 0886361 A2 discloses an electrostatic discharge (ESD) damage prevention device. The device includes a spark gap coupled in series with a high-impedance network with a first node of the series combination of the spark gap and high-impedance network coupled to a conductive location that may be subject to an electrostatic discharge and the second node coupled to a conductor capable of conducting away charge delivered by an ESD event. The spark gap defines the level of electrical isolation and the high-impedance network controls dissipation of charge delivered by an ESD event.

EP 2239925 A1 discloses an interface circuit. The interface circuit includes a transformer unit, a protection unit and an interface unit. A secondary side of the transformer unit is connected with a chip. A first terminal of the protection unit is electrically connected with a centre tap of a primary side of the transformer unit, and second terminal of the protection unit is grounded.

US 2007/041387 A1 disclose dynamic power management controllers configured for usage in a PSE and a PD coupled by a network cable in a configuration that transfers power and communication signals from the PSE to the PD.

### SUMMARY OF THE INVENTION

The present invention provides a port protection circuit that may protect against a common mode surge and an Ethernet power-sourcing equipment using the port protection circuit.

A port protection circuit is claimed with the features as defined in independent claims 1 and 7. The present invention also provides an Ethernet power-sourcing equipment, and the Ethernet power-sourcing equipment includes:
a PoE control chip, at least one port, and the above described port protection circuit.

In the port protection circuit provided by the embodiments of the present invention, the first common mode suppression component and the second common mode suppression component are connected to the two output ends of the rectifier bridge, respectively. Based on characteristics of the rectifier bridge, the protection circuit is balanced, so that the problem that a common mode overvoltage is converted into a differential mode overvoltage due to inconsistent actions of
protection components in the prior art can be effectively solved and safety is good.

### BRIEF DESCRIPTION OF THE DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic circuit diagram of a port protection circuit in the prior art;
FIG. 2 is a schematic circuit diagram of a port protection circuit provided by Embodiment 1 of the present invention;
FIG. 3 is a schematic diagram illustrating discharging of a positive common mode surge in the port protection circuit provided by Embodiment 1 of the present invention;
FIG. 4 is a schematic diagram illustrating discharging of a negative common mode surge in the port protection circuit provided by Embodiment 1 of the present invention;
FIG. 5 is a schematic circuit diagram of a port protection circuit provided by Embodiment 2 of the present invention;
FIG. 6 is a schematic circuit diagram of a port protection circuit provided by Embodiment 3 of the present invention;
FIG. 7 is a schematic circuit diagram of a port protection circuit provided for understanding FIG 10;
FIG 8 is a schematic diagram illustrating discharging of a positive common mode surge in the port protection circuit provided for understanding FIG 10;
FIG 9 is a schematic diagram illustrating discharging of a negative common mode surge in the port protection circuit provided for understanding FIG. 10;
FIG. 10 is a schematic circuit diagram of a port protection circuit provided by a further embodiment of the present invention;
FIG. 11 is a schematic circuit diagram of an Ethernet power-sourcing equipment provided for understanding the embodiment of FIG. 12; and
FIG. 12 is a schematic circuit diagram of an Ethernet power-sourcing equipment provided by a further embodiment of the present invention.

### DETAILED DESCRIPTION OF THE EMBODIMENTS

To make persons skilled in the art better understand the solutions of the present invention, the following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

Embodiments of the present invention provide a port protection circuit and an Ethernet power-sourcing equipment. To make the technical solutions of the embodiments of the present invention more comprehensible, the embodiments provided by the present invention are described in detail with reference to the accompanying drawings in the following.

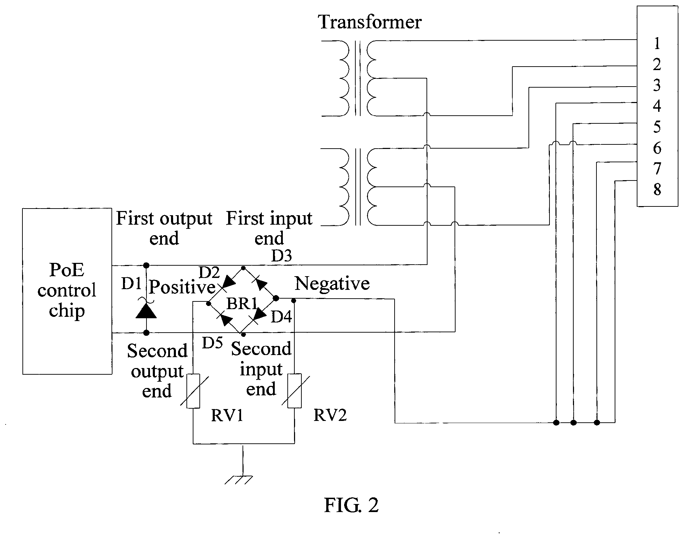

Referring to FIG. 2, FIG 2 is a schematic circuit diagram of a port protection circuit provided by Embodiment 1 of the present invention.

In the embodiment of the present invention, the port protection circuit mainly includes: a differential mode suppression componentD1, a first common mode suppression component RV1, a second common mode suppression component RV2, and a rectifier bridge BR1. In the embodiment of the present invention, the number of ports is 1, and correspondingly, the number of rectifier bridges is 1. As shown in FIG. 2, in the specific implementation, the rectifier bridge may be formed by using four diodes (D2, D3, D4, and D5). An anode of a first diode D2 is connected to a cathode of a second diode D3, an anode of the second diode D3 is connected to an anode of a third diode D4, a cathode of the third diode D4 is connected to an anode of a fourth diode D5, and a cathode of the fourth diode D5 is connected to a cathode of the first diode D2. The protection circuit in the embodiment of the present invention may be used in a FE (Fast Ethernet) (10/100 M) port.

The rectifier bridge may also be formed by a common cathode rectifier diode and a common anode rectifier diode.

A first input end and a second input end of the rectifier bridge BR1 are connected to a first direct current output end and a second direct current output end of a PoE control chip, respectively. A first output end (a positive end) or a second output end (a negative end) of the rectifier bridge is connected to an idle signal line of the port, where the idle signal line is an uncharged signal line, for example, signal lines 4, 5, 7, and 8 in FIG. 2.

An end of the first common mode suppression component RV1 is connected to the first output end of the rectifier bridge BR1, and another end of RV1 is grounded. An end of the second common mode suppression component RV2 is connected to the second output end of the rectifier bridge BR1, and another end of RV2 is grounded.

Further, the port protection circuit provided by the embodiment of the present invention may also include the differential mode suppression componentD1. An end of the differential mode suppression componentD1 is connected to the first direct current output end of the PoE control chip, and another end of D1 is connected to the second direct current output end of the PoE control chip. The differential mode suppression componentmay be used to protect against a differential mode surge between the two direct current output ends of the PoE control chip.

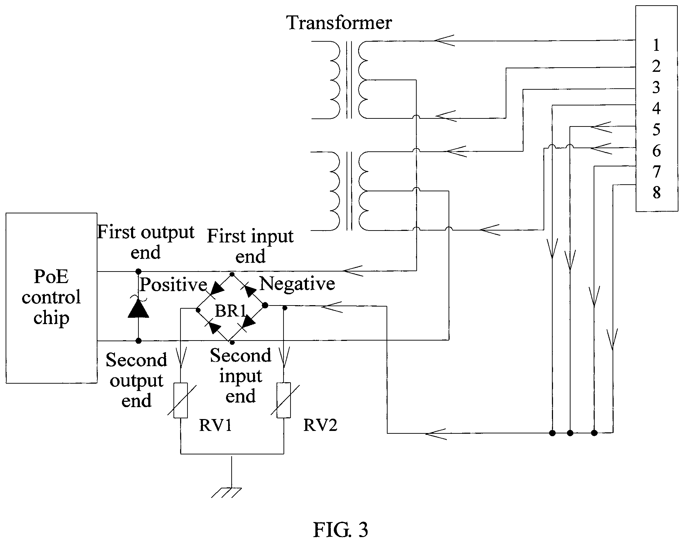

When a positive common mode surge voltage exists at the port, a discharge path of the port protection circuit provided by the embodiment of the present invention is shown in FIG. 3. That is, a positive common mode surge is discharged into the ground through the first common mode suppression component RV1 and the second common mode suppression component RV2.

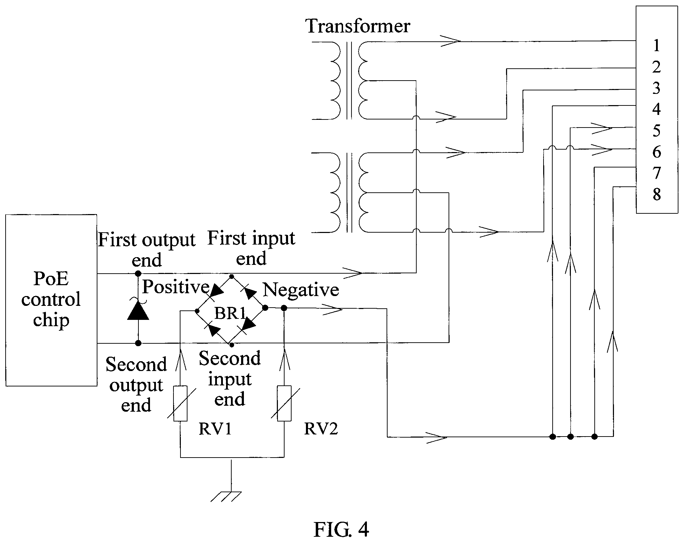

When a negative common mode surge voltage exists at the port, a discharge path of the port protection circuit provided by the embodiment of the present invention is shown in FIG 4. That is, a negative common mode surge is discharged into the ground through the first common mode suppression component RV1 and the second common mode suppression component RV2.

In the port protection circuit provided by Embodiment 1 of the present invention, the first common mode suppression component and the second common mode suppression component are connected to the two output ends of the rectifier bridge, respectively. Based on characteristics of the rectifier bridge, the protection circuit is balanced, so that the problem that a common mode overvoltage is converted into a differential mode overvoltage due to inconsistent actions of protection components in the prior art can be effectively solved and safety is good.

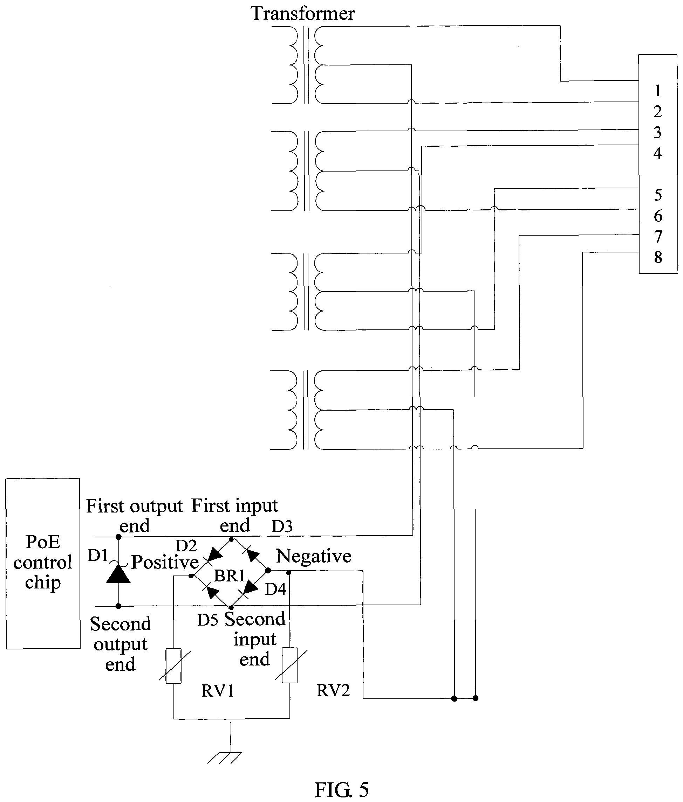

Referring to FIG. 5, FIG. 5 is a schematic circuit diagram of a port protection circuit provided by Embodiment 2 of the present invention.

The difference between the port protection circuit provided by Embodiment 2 of the present invention and the port protection circuit provided by Embodiment 1 lies in that, in this embodiment of the present invention, the first output end or the second output end of the rectifier bridge may be connected, through a central tap of a transformer of the corresponding port, to a signal line of the port. As shown in FIG. 5, the signal lines 4 and 5 are connected to the second output end of the rectifier bridge through a central tap of a transformer, and the signal lines 7 and 8 are connected to the second output end of the rectifier bridge through a central tap of a resistance transformer. The protection circuit in the embodiment of the present invention may be used in a GE (1000 M) port.

In the port protection circuit provided by the embodiment of the present invention, the first common mode suppression component RV1 and the second common mode suppression component RV2 may specifically be other components, such as voltage dependent resistors, semiconductor arresters, gas discharge tubes, or transient suppression diodes. The differential mode suppression componentD1 may be a transient suppression diode or a voltage dependent resistor or another component.

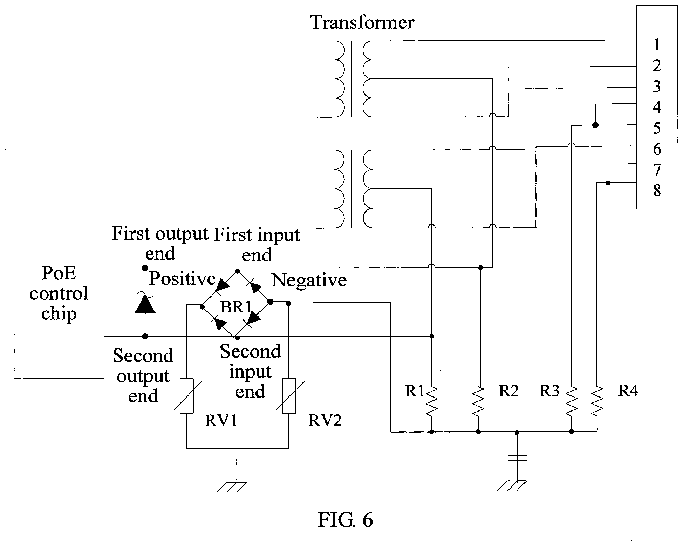

Referring to FIG. 6, FIG. 6 is a schematic circuit diagram of a port protection circuit provided by Embodiment 3 of the present invention.

The difference between the port protection circuit provided by Embodiment 3 of the present invention and the port protection circuit provided by Embodiment 1 lies in that, in this embodiment of the present invention, the first output end or the second output end of the rectifier bridge may be connected, through a central tap of a transformer of the corresponding port, to a signal line of the port, or connected, through a resistor, to a signal line of the port, or connected, through a central tap of a transformer and a resistor, to a signal line of the port. For example, signal lines 1 and 2 are connected to the second output end of the rectifier bridge through a resistor R2 and a central tap of a transformer, signal lines 3 and 6 are connected to the second output end of the rectifier bridge through a resistor R1 and a central tap of a transformer, signal lines 4 and 5 are connected to the second output end of the rectifier bridge through a resistor R3, and signal lines 7 and 8 are connected to the second output end of the rectifier bridge through a resistor R4.

In the port protection circuit provided by the embodiment of the present invention, the first common mode suppression component RV1 and the second common mode suppression component RV2 may specifically be other components, such as voltage dependent resistors, semiconductor arresters, gas discharge tubes, or transient suppression diodes.

In the embodiment of the present invention, resistors are connected to the first output end or the second output end of the rectifier bridge, for impedance matching at the port, thereby providing the protection circuit with better electromagnetic compatibility.

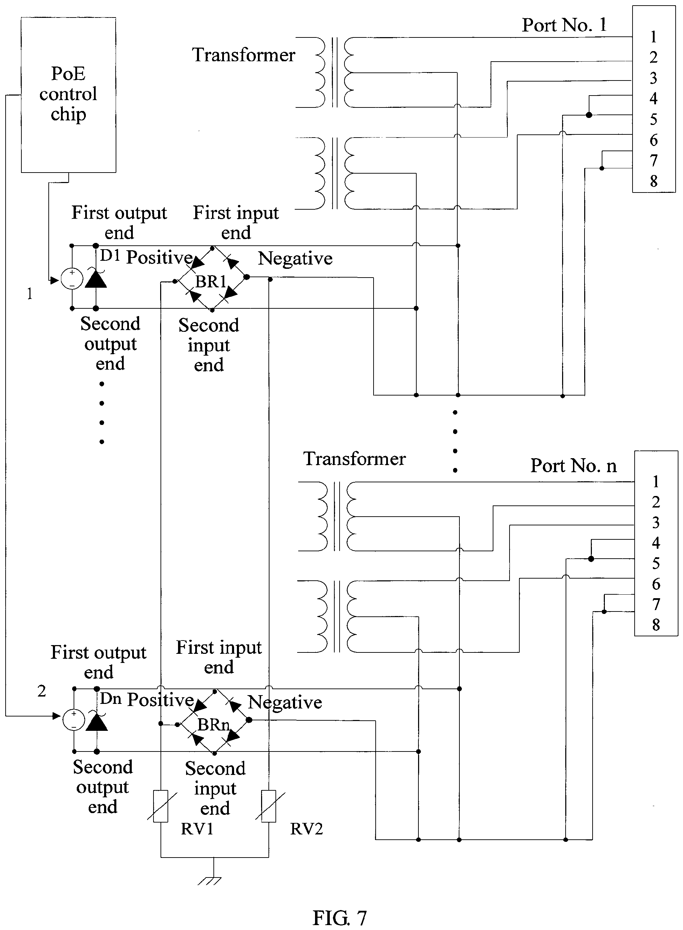

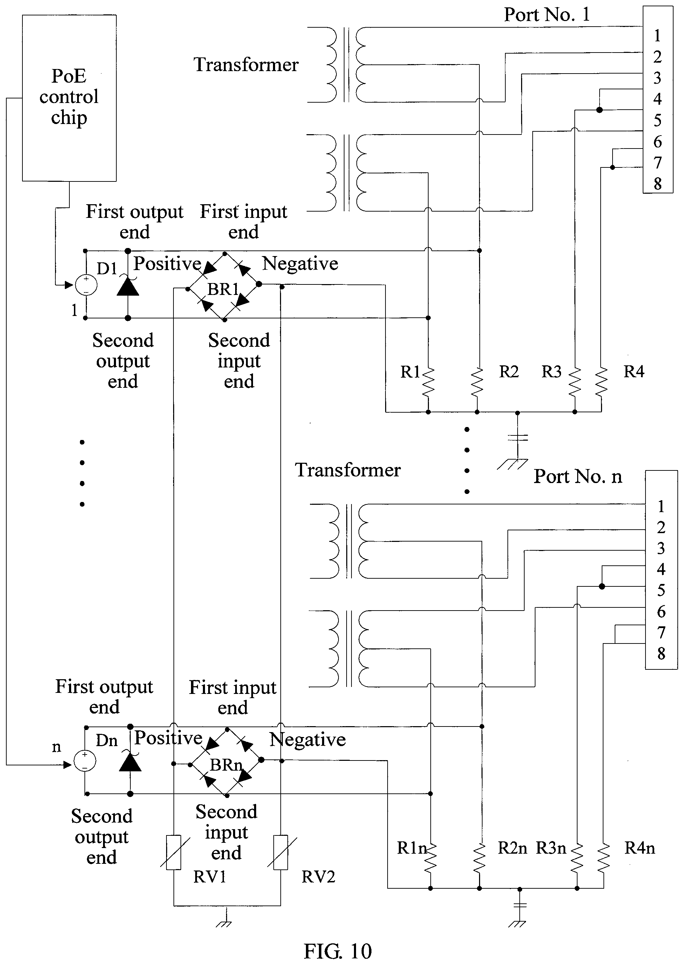

Referring to FIG. 7 , FIG. 7 is a schematic circuit diagram of a port protection circuit provided for understanding the embodiment of FIG. 10.

In the embodiment of the present invention, the port protection circuit mainly includes:
n differential mode protection components D1, D2, ..., Dn, n rectifier bridges BR1, BR2, ..., BRn, a first common mode suppression component RV1, and a second common mode suppression component RV2.
n is equal to the number of ports in a power-sourcing equipment, n is greater than 1, and each port includes a rectifier bridge. As shown in FIG. 7, in specific implementation, the rectifier bridge may be formed by using four diodes (D2, D3, D4, and D5).

In the embodiment, a first input end and a second input end of each rectifier bridge are connected to a first direct current output end and a second direct current output end of a PoE control chip, respectively. A first output end or a second output end of each rectifier bridge is connected to a signal line of a corresponding port.

The PoE control chip may include a plurality of sets of direct current output ends. For example, a first input end and a second input end of the rectifier bridge BR1 are connected to a first direct current output end and a second direct current output end in a first set of direct current output ends, respectively. A second output end of the rectifier bridge BR1 is connected to signal lines 1 to 8 of a corresponding port No. 1.

In the embodiment, an end of the first common mode suppression component RV1 is connected to a first output end of each rectifier bridge, and another end of RV1 is grounded. An end of the second common mode suppression component RV2 is connected to a second output end of each rectifier bridge, and another end of RV2 is grounded. In the embodiment of the present invention, a first output end of each rectifier bridge is grounded through a common mode suppression component and a second output end of each rectifier bridge is grounded through a common mode suppression component.

In the port protection circuit provided by the embodiment, the first common mode suppression component and the second common mode suppression component are connected to two output ends of the rectifier bridge, respectively, so that the protection circuit is balanced, the problem that a common mode overvoltage is converted into a differential mode overvoltage due to inconsistent actions of protection components in the prior art can be effectively solved, and safety is good.

In addition, the port protection circuit provided by the embodiment of the present invention may be applied to multiple ports. Compared with the prior art in which a single common mode suppression component needs to be provided for each port, in the port protection circuit provided by the embodiment of the present invention, one set of common mode suppression components is shared, which may reduce the volume of the port protection circuit, thereby saving the cost of the protection circuit.

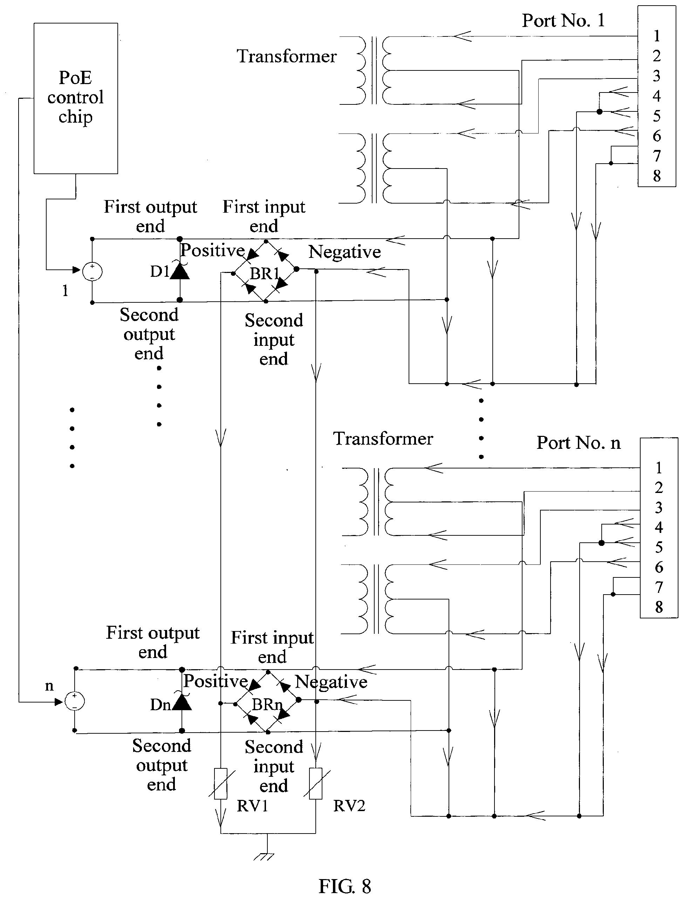

When a positive common mode surge voltage exists at the port, a discharge path of the port protection circuit provided by the embodiment is shown in FIG. 8. That is, a positive common mode surge is discharged into the ground through the first common mode suppression component RV1 and the second common mode suppression component RV2.

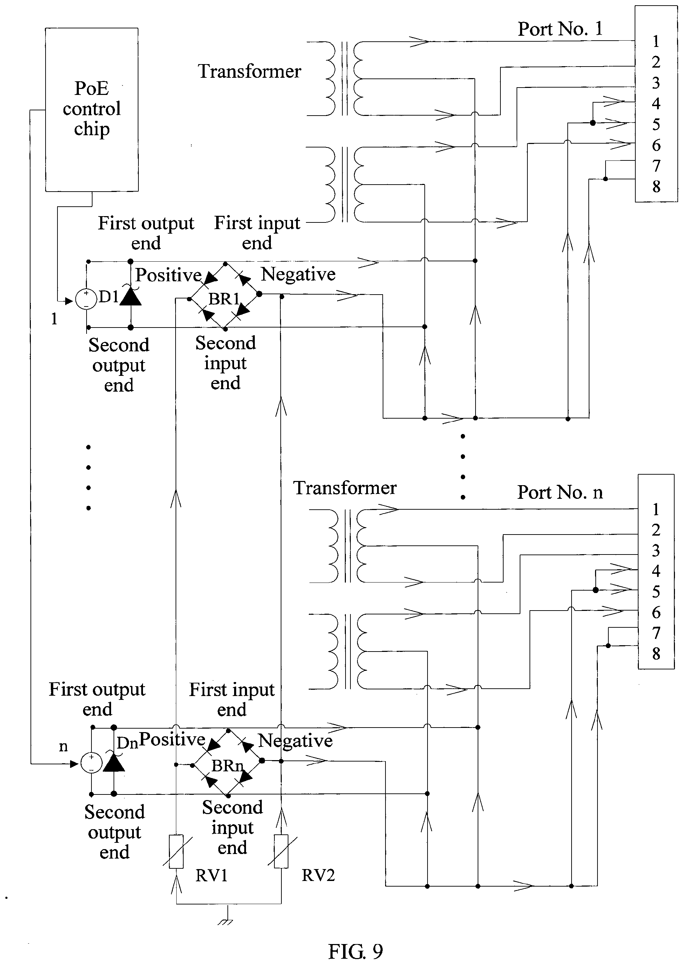

When a negative common mode surge voltage exists at the port, a discharge path of the port protection circuit provided by the embodiment is shown in FIG. 9. That is, a negative common mode surge is discharged into the ground through the first common mode suppression component RV1 and the second common mode suppression component RV2.

Referring to FIG. 10, FIG. 10 is a schematic circuit diagram of a port protection circuit provided by a further embodiment of the present invention.

The difference between the port protection circuit provided by the further embodiment of the present invention and the port protection circuit provided by the embodiment of FIGS. 7-9 lies in that a first output end or a second output end of each rectifier bridge is connected to a signal line of a port through a resistor. For example, signal lines 1 and 2 of the port No. 1 are connected to the second output end of the rectifier bridge BR1 through a resistor R2, signal lines 3 and 6 are connected to the second output end of the rectifier bridge BR1 through a resistor R1, signal lines 4 and 5 are connected to the second output end of the rectifier bridge BR1 through a resistor R3, and signal lines 7 and 8 are connected to the second output end of the rectifier bridge BR1 through a resistor R4.

The port protection circuit provided by the embodiment of the present invention is introduced in detail above. An embodiment of the present invention further provides an Ethernet power-sourcing equipment including the above described port protection circuit.

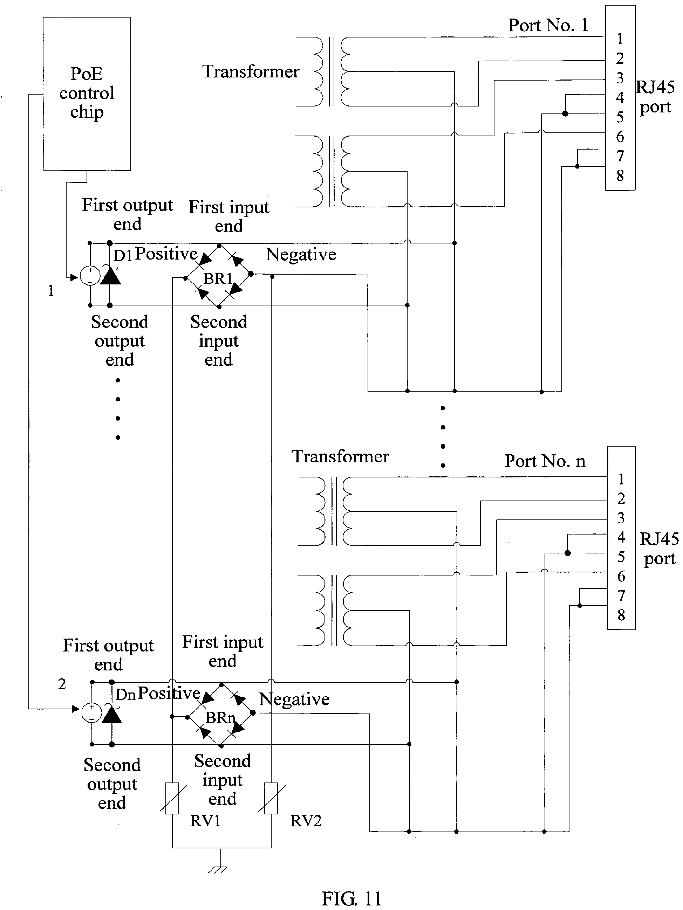

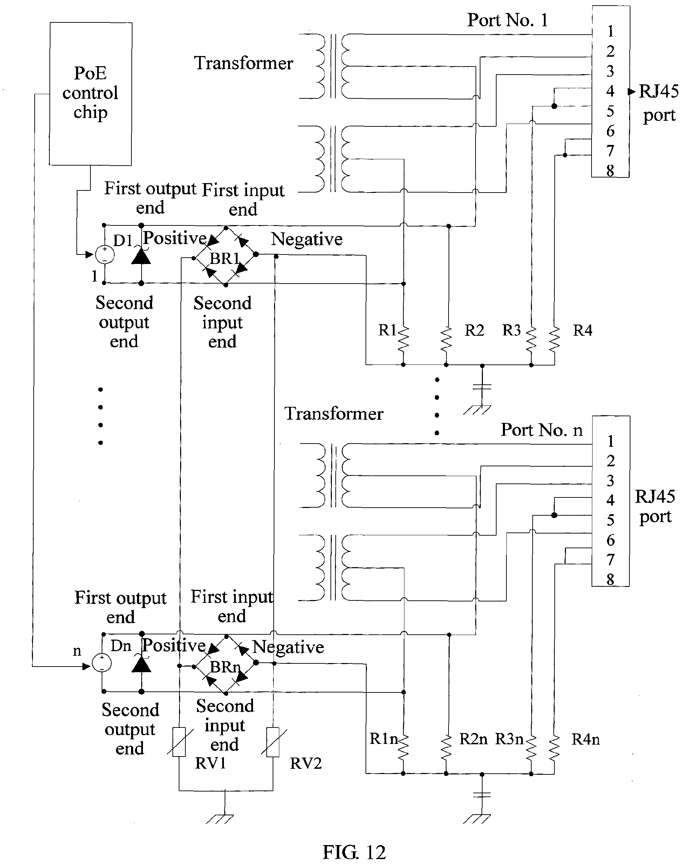

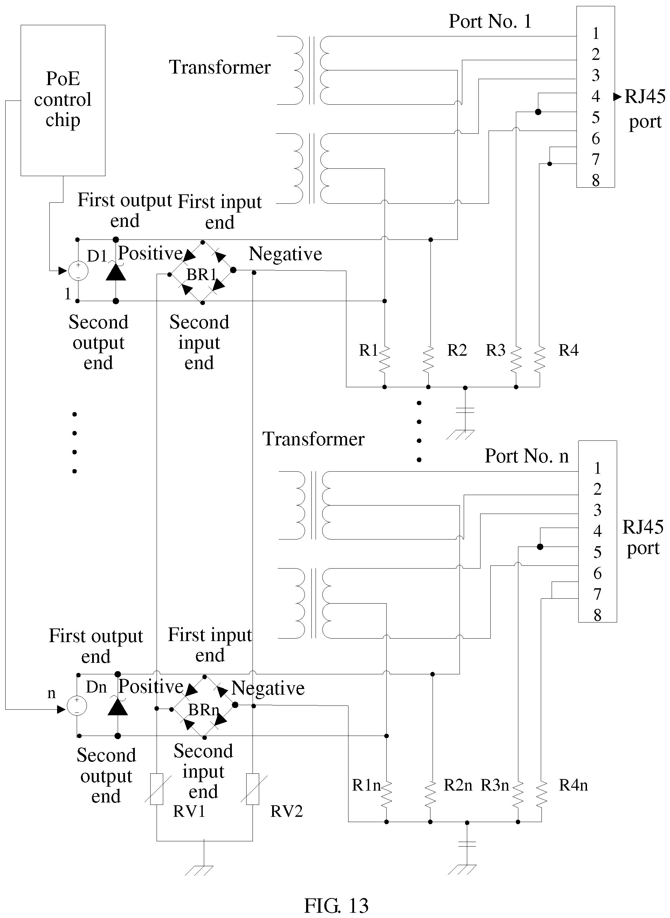

Referring to FIG 11, FIG. 11 is a schematic circuit diagram of an Ethernet power-sourcing equipment provided for understanding the embodiment shown in FIG. 12.

In the embodiment, the Ethernet power-sourcing equipment mainly includes: a port and a port protection circuit. The number of ports is m and m is a positive integer. The Ethernet power-sourcing equipment further includes a PoE control chip. A port in an Ethernet is specifically an RJ45 port.

For details about the structure of the port protection circuit, reference may be made to the relevant description of the above Embodiments 1, 2, 3, 4, 5, and 6, and the details are not repeated herein again.

As shown in FIG. 11, in the Ethernet power-sourcing equipment provided by the embodiment, each port further includes signal lines and transformers connected to the port.

When the Ethernet power-sourcing equipment is supplying power, signal lines 1, 2, 3, and 6 of a port No. 1 (an RJ45 port) are charged, and the signal lines 1 and 2 are connected to a second output end of a rectifier bridge through a central tap of a transformer and the signal lines 3 and 6 are connected to the second output end of the rectifier bridge through a central tap of a transformer. Idle signal lines 4, 5, 7, and 8 are uncharged and are directly connected to the second output end of the rectifier bridge.

In the Ethernet power-sourcing equipment provided by the embodiment, a positive common mode surge or a negative common mode surge at the port may be discharged through common mode suppression components RV1 and RV2. For a specific schematic diagram illustrating the discharging, reference is made to relevant description of the above Embodiments 1 and 3.

In the Ethernet power-sourcing equipment provided by the embodiment, a first common mode suppression component RV1 and a second common mode suppression component RV2 in the port protection circuit may specifically be other components, such as voltage dependent resistors, semiconductor arresters, gas discharge tubes, or transient suppression diodes. A differential mode suppression componentD1 may specifically be a transient suppression diode or a voltage dependent resistor.

In the Ethernet power-sourcing equipment provided by the embodiment, the first common mode suppression component and the second common mode suppression component of the port protection circuit are connected to two output ends of a rectifier bridge, respectively, so that the protection circuit is balanced, the problem that a common mode overvoltage is converted into a differential mode overvoltage due to inconsistent actions of protection components in the prior art can be effectively solved, and safety is good.

In addition, the port protection circuit in the Ethernet power-sourcing equipment provided by the embodiment may be applied to a plurality of ports. Compared with the prior art in which a single common mode suppression component needs to be provided for each port, in the port protection circuit provided by the embodiment of the present invention, one set of common mode suppression components is shared, which may reduce the volume of the port protection circuit and may further save the space occupied by the port protection circuit. In this way, not only a cost may be saved, but also the demand for protecting high-density ports of the Ethernet power-sourcing equipment against a large surge current may be implemented.

Referring to FIG. 12, FIG. 12 is a schematic circuit diagram of an Ethernet power-sourcing equipment according to a further embodiment of the present invention.

The difference between the Ethernet power-sourcing equipment provided by the further embodiment of the present invention and the Ethernet power-sourcing equipment provided by the embodiment shown in FIG. 11 lies in that the first output end or the second output end of the rectifier bridge is connected to a signal line of a port through a resistor in the port protection circuit. For example, the signal lines 1 and 2 of the port No. 1 (the RJ45 port) are connected to the second output end of the rectifier bridge through a resistor R2, the signal lines 3 and 6 are connected to the second output end of the rectifier bridge through a resistor R1, the signal lines 4 and 5 are connected to the second output end of the rectifier bridge through a resistor R3, and the signal lines 7 and 8 are connected to the second output end of the rectifier bridge through a resistor R4.

The port protection circuit and the Ethernet power-sourcing equipment provided by the embodiments of the present invention are introduced in detail above. Persons of ordinary skill in the art can make variations to the present invention in terms of the specific implementation and the application scope as defined in the appended claims.

## Claims

1. A port protection circuit protecting at least one port adapted to supply power from a power sourcing equipment, PSE, via an Ethernet cable to a powered device, PD, comprising:
a first common mode suppression component (RV1), a second common mode suppression component (RV2), and at least one rectifier bridge (BR1;BRn), where each of the at least one rectifier bridge is in one-to-one correspondence with a port and with a set of direct current output ends of a power over Ethernet, PoE, control chip, wherein
a first input end and a second input end of each rectifier bridge is adapted to be connected to a first direct current output end and a second direct current output end of the corresponding set of direct current output ends of the power over Ethernet, PoE, control chip; the first input end of each rectifier bridge is further adapted to be connected via a central tap of a transformer to charged signal lines (1, 2) of the corresponding port and the second input end of each rectifier bridge is further adapted to be connected via a central tap of a further transformer to further charged signal lines (3, 6) of the corresponding port;
one of a first output end or a second output end of each rectifier bridge is adapted to be connected to idle signal lines (4, 5, 7, 8) of the corresponding port, wherein the idle signal lines are uncharged signal lines;
an end of the first common mode suppression component (RV1) is connected to the first output end of each rectifier bridge, and another end of the first common mode suppression component is grounded; and
an end of the second common mode suppression (RV2) is connected to the second output end of each rectifier bridge, and another end of the second common mode suppression component is grounded.

2. The port protection circuit according to claim 1, wherein
the first output end or the second output end of the rectifier bridge is connected to the charged and idle signal lines of the port through resistors, respectively.

3. The port protection circuit according to any one of claims 1 to 2, wherein
the first common mode suppression component and the second common mode suppression component are voltage dependent resistors, semiconductor arresters, gas discharge tubes, or transient suppression diodes.

4. The port protection circuit according to any one of claims 1 to 2, wherein
each rectifier bridge comprises a common anode rectifier diode and a common cathode rectifier diode; or
the rectifier bridge comprises a first diode, a second diode, a third diode, and a fourth diode, wherein an anode of the first diode is connected to a cathode of the second diode, an anode of the second diode is connected to an anode of the third diode, a cathode of the third diode is connected to an anode of the fourth diode, and a cathode of the fourth diode is connected to a cathode of the first diode.

5. The port protection circuit according to any one of claims 1 to 2, further comprising:
a differential mode suppression component (D1, ..., Dn), wherein an end of the differential mode suppression component is adapted to be connected to the first direct current output end of the corresponding set of direct current output ends of the PoE control chip, and another end of the differential mode suppression component is adapted to be connected to the second direct current output end of the corresponding set of direct current output ends of the PoE control chip.

6. The port protection circuit according to claim 5, wherein
the differential mode suppression component comprises a transient suppression diode or a voltage dependent resistor.

7. A port protection circuit protecting at least one port adapted to supply power from a power sourcing equipment, PSE, via an Ethernet cable to a powered device, PD, comprising:
a first common mode suppression component (RV1), a second common mode suppression component (RV2), and one rectifier bridge (BR1; BR2) corresponding to a port and to a set of direct current output ends of a power over Ethernet, PoE, control chip, wherein
a first input end and a second input end of the
rectifier bridge is adapted to be connected to a first direct current output end and a second direct current output end of the set of direct current output ends of the power over Ethernet, PoE, control chip, respectively; the first input end of the rectifier bridge is further adapted to be connected via a central tap of a first transformer to charged signal lines (1, 2) of the port and the second input end of the rectifier bridge is further adapted to be connected via a central tap of a second transformer to further charged signal lines (3, 6) of the port;
a first output end or a second output end of the rectifier bridge is adapted to be connected via two central taps of two further transformers to charged signal lines (4, 5, 7, 8) of the port;
an end of the first common mode suppression component is connected to the first output end of the rectifier bridge, and another end of the first common mode suppression (RV1) is grounded; and
an end of the second common mode suppression component (RV2) is connected to the second output end of the rectifier bridge, and another end of the second common mode suppression component is grounded.

8. An Ethernet power-sourcing equipment, comprising:
a power over Ethernet, PoE, control chip adapted to supply power to at least one port;
and further comprising:
the port protection circuit according to any one of claims 1 to 7.

## Patentansprüche

1. Anschlussschutzschaltung, die mindestens einen Anschluss schützt, ausgelegt zum Zuführen von Strom von einer Stromversorgungsgerätschaft, PSE, über ein Ethernet-Kabel zu einer bestromten Vorrichtung, PD, Folgendes umfassend:
eine erste Gleichtaktunterdrückungskomponente (RV1), eine zweite Gleichtaktunterdrückungskomponente (RV2) und mindestens eine Gleichrichterbrücke (BR1; BRn), bei denen sich jede der mindestens einen Gleichrichterbrücke in einer Eins-zu-Eins-Übereinstimmung mit einem Anschluss und mit einem Satz von Gleichstromausgangsenden eines Strom-über-Ethernet-Steuerchips bzw. PoE-Steuerchips befindet, wobei ein erstes Eingangsende und ein zweites Eingangsende von jeder Gleichrichterbrücke dafür ausgelegt ist, mit einem ersten Gleichstromausgangsende und einem zweiten Gleichstromausgangsende des entsprechenden Satzes von Gleichstromausgangsenden des Strom-über-Ethernet-Steuerchips bzw. PoE-Steuerchips verbunden zu werden; wobei das erste Eingangsende von jeder Gleichrichterbrücke ferner dafür ausgelegt ist, über einen Mittelabgriff eines Transformators mit geladenen Signalleitungen (1, 2) des entsprechenden Anschlusses verbunden zu werden und wobei das zweite Eingangsende von jeder Gleichrichterbrücke ferner dafür ausgelegt ist, über einen Mittelabgriff eines weiteren Transformators mit weiteren geladenen Signalleitungen (3, 6) des entsprechenden Anschlusses verbunden zu werden;
eines eines ersten Ausgangsendes oder eines zweiten Ausgangsendes von jeder Gleichrichterbrücke dafür ausgelegt ist, mit Ruhesignalleitungen (4, 5, 7, 8) des entsprechenden Anschlusses verbunden zu werden, wobei die Ruhesignalleitungen ungeladene Signalleitungen sind;
ein Ende der ersten Gleichtaktunterdrückungskomponente (RV1) mit dem ersten Ausgangsende von jeder Gleichrichterbrücke verbunden ist und ein anderes Ende der ersten Gleichtaktunterdrückungskomponente mit Masse verbunden ist; und
ein Ende der zweiten Gleichtaktunterdrückung (RV2) mit dem zweiten Ausgangsende von jeder Gleichrichterbrücke verbunden ist und ein anderes Ende der zweiten Gleichtaktunterdrückungskomponente mit Masse verbunden ist.

2. Anschlussschutzschaltung nach Anspruch 1, wobei
das erste Ausgangsende oder das zweite Ausgangsende der Gleichrichterbrücke mit den geladenen und den Ruhesignalleitungen des Anschlusses jeweils über Widerstände verbunden sind.

3. Anschlussschutzschaltung nach einem der Ansprüche 1 bis 2, wobei
die erste Gleichtaktunterdrückungskomponente und die zweite Gleichtaktunterdrückungskomponente spannungsabhängige Widerstände, Halbleiterableiter, Gasentladungsröhren oder Transientenunterdrückungsdioden sind.

4. Anschlussschutzschaltung nach einem der Ansprüche 1 bis 2, wobei
jede Gleichrichterbrücke eine Gleichrichterdiode mit gemeinsamer Anode und eine Gleichrichterdiode mit gemeinsamer Kathode umfasst; oder
die Gleichrichterbrücke eine erste Diode, eine zweite Diode, eine dritte Diode und eine vierte Diode umfasst, wobei eine Anode der ersten Diode mit einer Kathode der zweiten Diode verbunden ist, eine Anode der zweiten Diode mit einer Anode der dritten Diode verbunden ist, eine Kathode der dritten Diode mit einer Anode der vierten Diode verbunden ist und eine Kathode der vierten Diode mit einer Kathode der ersten Diode verbunden ist.

5. Anschlussschutzschaltung nach einem der Ansprüche 1 bis 2, die ferner Folgendes umfasst:
eine Differenzmodusunterdrückungskomponente (D1, ..., Dn), wobei ein Ende der Differenzmodusunterdrückungskomponente dafür ausgelegt ist, mit dem ersten Gleichstromausgangsende des entsprechenden Satzes von Gleichstromausgangsenden des PoE-Steuerchips verbunden zu werden, und ein anderes Ende der Differenzmodusunterdrückungskomponente dafür ausgelegt ist, mit dem zweiten Gleichstromausgangsende des entsprechenden Satzes von Gleichstromausgangsenden des PoE-Steuerchips verbunden zu werden.

6. Anschlussschutzschaltung nach Anspruch 5, wobei
die Differenzmodusunterdrückungskomponente eine Transientenunterdrückungsdiode oder einen spannungsabhängigen Widerstand umfasst.

7. Anschlussschutzschaltung, die mindestens einen Anschluss schützt, ausgelegt zum Zuführen von Strom von einer Stromversorgungsgerätschaft, PSE, über ein Ethernet-Kabel zu einer bestromten Vorrichtung, PD, Folgendes umfassend:
eine erste Gleichtaktunterdrückungskomponente (RV1), eine zweite Gleichtaktunterdrückungskomponente (RV2) und eine Gleichrichterbrücke (BR1;
BR2), die einem Anschluss und einem Satz von Gleichstromausgangsenden eines Strom-über-Ethernet-Steuerchips bzw. PoE-Steuerchips entsprechen,
wobei ein erstes Eingangsende und ein zweites Eingangsende der Gleichrichterbrücke dafür ausgelegt sind, mit einem ersten Gleichstromausgangsende und einem zweiten Gleichstromausgangsende des jeweiligen Satzes von Gleichstromausgangsenden des Strom-über-Ethernet-Steuerchips bzw. PoE-Steuerchips verbunden zu werden; wobei das erste Eingangsende der Gleichrichterbrücke ferner dafür ausgelegt ist, über einen Mittelabgriff eines ersten Transformators mit geladenen Signalleitungen (1, 2) des Anschlusses verbunden zu werden und wobei das zweite Eingangsende der Gleichrichterbrücke ferner dafür ausgelegt ist, über einen Mittelabgriff eines zweiten Transformators mit weiteren geladenen Signalleitungen (3, 6) des Anschlusses verbunden zu werden;
ein erstes Ausgangsende oder ein zweites Ausgangsende der Gleichrichterbrücke dafür ausgelegt ist, über zwei Mittelabgriffe von zwei weiteren Transformatoren mit Ruhesignalleitungen (4, 5, 7, 8) des Anschlusses verbunden zu werden;
ein Ende der ersten Gleichtaktunterdrückungskomponente mit dem ersten Ausgangsende der Gleichrichterbrücke verbunden ist und ein anderes Ende der ersten Gleichtaktunterdrückungskomponente (RV1) mit Masse verbunden ist; und ein Ende der zweiten Gleichtaktunterdrückungskomponente (RV2) mit dem zweiten Ausgangsende der Gleichrichterbrücke verbunden ist und ein anderes Ende der zweiten Gleichtaktunterdrückungskomponente mit Masse verbunden ist.

8. Ethernet-Stromversorgungsgerätschaft, die Folgendes umfasst:
einen Strom-über-Ethernet-Steuerchip bzw. PoE-Steuerchip, der ausgelegt ist zum Versorgen mindestens eines Anschlusses; und ferner umfassend:
die Anschlussschutzschaltung nach einem der Ansprüche 1 bis 7.

## Revendications

1. Circuit de protection de ports protégeant au moins un port conçu pour fournir de l'énergie à partir d'un équipement formant source d'alimentation, PSE, via un câble Ethernet vers un dispositif alimenté, PD, comprenant :
un premier composant de suppression de mode commun (RV1), un second composant de suppression de mode commun (RV2) et au moins un pont de redressement (BR1 ; BRn), chacun du ou des ponts de redressement se trouvant en correspondance biunivoque avec un port et avec un ensemble de terminaisons de sortie en courant continu d'une puce de commande d'alimentation par Ethernet, PoE, dans lequel
une première terminaison d'entrée et une seconde terminaison d'entrée de chaque pont de redressement est conçue pour être reliée à une première terminaison de sortie en courant continu et à une seconde terminaison de sortie en courant continu de l'ensemble correspondant de terminaisons de sortie en courant continu de la puce de commande d'alimentation par Ethernet, PoE ; la première terminaison d'entrée de chaque pont de redressement est en outre conçue pour être reliée par l'intermédiaire de la prise centrale d'un transformateur à des lignes de signaux chargées (1, 2) du port correspondant, et la seconde terminaison d'entrée de chaque pont de redressement est en outre conçue pour être reliée par l'intermédiaire de la prise centrale d'un autre transformateur à d'autres lignes de signaux chargées (3, 6) du port correspondant,
l'une d'une première terminaison de sortie ou d'une seconde terminaison de sortie de chaque pont de redressement est conçue pour être reliée à des lignes de signaux au repos (4, 5, 7, 8) du port correspondant, les lignes de signaux au repos sont des lignes de signaux non chargées,
une terminaison du premier composant de suppression de mode commun (RV1) est reliée à la première terminaison de sortie de chaque pont de redressement et une autre terminaison du premier composant de suppression de mode commun est mise à la masse, et
une terminaison du second composant de suppression de mode commun (RV2) est reliée à la seconde terminaison de sortie de chaque pont de redressement et une autre terminaison du second composant de suppression de mode commun est mise à la masse.

2. Circuit de protection de ports selon la revendication 1, dans lequel :
la première terminaison de sortie ou la seconde terminaison de sortie du pont de redressement sont respectivement reliées aux lignes de signaux chargées et au repos du port par l'intermédiaire de résistances.

3. Circuit de protection de ports selon l'une quelconque des revendications 1 et 2, dans lequel :
le premier composant de suppression de mode commun et le second composant de suppression de mode commun sont des résistances dépendant de la tension, des limiteurs de surtension à semi-conducteur, des tubes à décharge de gaz ou des diodes de suppression de transitoires.

4. Circuit de protection de ports selon l'une quelconque des revendications 1 et 2, dans lequel :
chaque pont de redressement comprend une diode de redressement à anode commune et une diode de redressement à cathode commune, ou
le pont de redressement comprend une première diode, une deuxième diode, une troisième diode et une quatrième diode, l'anode de la première diode étant reliée à la cathode de la second diode, l'anode de la seconde diode étant reliée à l'anode de la troisième diode, la cathode de la troisième diode étant reliée à l'anode de la quatrième diode et la cathode de la quatrième diode étant reliée à la cathode de la première diode.

5. Circuit de protection de ports selon l'une quelconque des revendications 1 et 2, comprenant en outre :
un composant de suppression de mode différentiel (D1, ..., Dn), dans lequel une terminaison du composant de suppression de mode différentiel est conçue pour être reliée à la première terminaison de sortie en courant continu de l'ensemble correspondant de terminaisons de sortie en courant continu de la puce de commande PoE, et une autre terminaison du composant de suppression de mode différentiel est conçue pour être reliée à la seconde terminaison de sortie en courant continu de l'ensemble correspondant de terminaisons de sortie en courant continu de la puce de commande PoE.

6. Circuit de protection de ports selon la revendication 5, dans lequel :
le composant de suppression de mode différentiel comprend une diode de suppression de transitoires ou une résistance dépendant de la tension.

7. Circuit de protection de ports protégeant au moins un port conçu pour fournir de l'énergie à partir d'un équipement formant source d'alimentation, PSE, via un câble Ethernet à un dispositif alimenté, PD, comprenant
un premier composant de suppression de mode commun (RV1), un second composant de suppression de mode commun (RV2) et un pont de redressement (BR1 ; BR2) correspondant à un port et à un ensemble de terminaisons de sortie en courant continu d'une puce de commande d'alimentation par Ethernet, PoE, dans lequel
une première terminaison d'entrée et une seconde terminaison d'entrée du pont de redressement sont conçues pour être respectivement reliées à une première terminaison de sortie en courant continu et à une seconde terminaison de sortie en courant continu de l'ensemble de terminaisons de sortie en courant continu de la puce de commande d'alimentation par Ethernet, PoE ; la première terminaison d'entrée du pont de redressement est en outre conçue pour être reliée par l'intermédiaire de la prise centrale d'un transformateur à des lignes de signaux chargées (1, 2) du port, et la seconde terminaison d'entrée du pont de redressement est en outre conçue pour être reliée par l'intermédiaire de la prise centrale d'un second transformateur à d'autres lignes de signaux chargées (3, 6) du port,
une première terminaison de sortie ou une seconde terminaison de sortie du pont de redressement sont conçues pour être reliées par l'intermédiaire de deux prises centrales de deux autres transformateurs à des lignes de signaux chargées (4, 5, 7, 8) du port,
une terminaison du premier composant de suppression de mode commun est reliée à la première terminaison de sortie du pont de redressement et une autre terminaison du premier composant de suppression de mode commun (RV1) est mise à la masse, et une terminaison du second composant de suppression de mode commun (RV2) est reliée à la seconde terminaison de sortie du pont de redressement et une autre terminaison du second composant de suppression de mode commun est mise à la masse.

8. Équipement formant alimentation par Ethernet comprenant :
une puce de commande d'alimentation par Ethernet, PoE, conçue pour fournir de l'énergie à au moins un port,
et comprenant en outre :
le circuit de protection de ports conforme à l'une quelconque des revendications 1 à 7.
